# EUROPÄISCHE PATENTANMELDUNG

(11) **EP 4 400 746 A1**
(43) Veröffentlichungstag der Anmeldung: **17.07.2024**
(21) Anmeldenummer: 23151215.3
(22) Anmeldetag: 11.01.2023
(51) Int. Cl.: F16H 61/28, F16H 61/32

(54) **VERFAHREN ZUM SCHALTEN EINES ELEKTRISCH SCHALTBAREN GETRIEBES FÜR EIN FAHRZEUG, INSBESONDERE NUTZFAHRZEUG**

(71) Anmelder: ZF CV Systems Global GmbH, 3006 Bern (CH)
(72) Erfinder: CALLESEN, Matthias, 30974 Wennigsen (DE); WINKELHOLZ, Uwe, 30974 Wennigsen (DE)
(74) Vertreter: Ohlendorf, Henrike

(57) **Zusammenfassung**

Verfahren (100) zum Schalten eines elektrisch schaltbaren Getriebes (230) für ein Fahrzeug (200a), insbesondere Nutzfahrzeug (200b), wobei das Verfahren (100) aufweist: Ermitteln (110) einer ein Schaltelement (235) des Getriebes (230) betreffenden Randbedingung (310); Bestimmen (120) eines Bewegungsprofils (300) für das Schaltelement (235), wobei das Bewegungsprofil (300) eine Position (P) des Schaltelements (235) in Abhängigkeit von einer Zeit (t) definiert; und Ausgeben (130) eines Regelsignals (255) zum Regeln der Position des Schaltelements (235) anhand des Bewegungsprofils (300).

## Beschreibung

Die Erfindung betrifft ein Verfahren zum Schalten eines elektrisch schaltbaren Getriebes für ein Fahrzeug, insbesondere Nutzfahrzeug. Die Erfindung betrifft auch ein Computerprogramm und/oder computerlesbares Medium, ein Steuergerät für ein Fahrzeug, insbesondere Nutzfahrzeug, mit einem elektrisch schaltbaren Getriebe, ein elektrisch schaltbares Getriebe mit einem Schaltelement und ein Fahrzeug, insbesondere Nutzfahrzeug.

Elektrisch schaltbare Getriebe sind aus dem Stand der Technik bekannt. Dabei wird ein Zielposition eines elektrischen Schaltaktuators ähnlich zu der Zielposition eines pneumatischen Schaltaktuators eingestellt. Die Zielposition wird vorgegeben und der Schaltaktuators stellt ein Schaltelement des Getriebes gemäß der angeforderten Zielposition unter Verwendung einer Kraft ein. Dabei kann ein Aufprall des Schaltelements bei Erreichen der Zielposition oder eine unter Umständen eintretende Blockierung der eingeleiteten Bewegung in einer Zahn-zu-Zahn-Stellung erfolgen. Beides kann zu Geräuschen und/oder zu einer Beeinträchtigung der Funktion des Getriebes führen.

DE 197 13 423 C5 offenbart eine Vorrichtung zur automatisierten Betätigung eines zwischen mehreren Gängen schaltbaren Getriebes mit einem zumindest bei einem Gangwechsel automatisiert betätigbaren Drehmomentübertragungssystem, mit zumindest einem von zumindest einer Antriebseinheit antreibbaren Betätigungselement und zumindest einem getriebeseitig angeordneten betätigbaren Schaltelement. Bei dieser Vorrichtung ist zwischen dem zumindest einen getriebeseitig angeordneten Schaltelement und der zumindest einen Antriebseinheit eine Antriebsverbindung vorhanden und im Wesentlichen im Kraftweg dieser Antriebsverbindung zwischen Antriebseinheit und dem zumindest einen Schaltelement eine zusätzliche vorgebbare Elastizität oder ein zusätzliches Element mit einer vorgebbaren Elastizität wirksam angeordnet.

DE 694 02 779 T2 offenbart ein Verfahren zum Steuern einer auf einen Schaltmechanismus eines automatischen mechanischen Getriebes bei einem Schaltvorgang ausgeübten Kraft, wobei das Getriebe wenigstens eine Schaltstange aufweist, der Schaltmechanismus einen von einem Motor angetriebenen Schaltfinger enthält, der Schaltfinger mit der Schaltstange zusammenwirkt, um das Schalten des Getriebes zu bewirken, wobei das Verfahren beinhaltet, dass ein Motor mit einem impulsbreitenmodulierten Steuersignal mit variablem Lastzyklus erregt wird, um einen Zielstrom zu erzeugen, der an den Motor angelegt wird, und wobei der von dem Motor gezogene Strom erfasst wird, wobei ständiges Nachregulieren des Lastzyklus des Steuersignales bei einem Schaltvorgang als eine Funktion der Fehlersumme zwischen dem erfassten Strom und dem Zielstrom zuzüglich der Änderungsgeschwindigkeit des Fehlers, um den Fehler auf Null zu vermindern.

Der Erfindung liegt daher die Aufgabe zugrunde, den Stand der Technik zu bereichern und ein verbessertes Verfahren zum Schalten eines elektrisch schaltbaren Getriebes bereitzustellen. Insbesondere kann die Erfindung die Aufgabe lösen, die Bewegung eines Schaltelements zu verbessern, um die Funktionsfähigkeit des Schaltgetriebes zu verbessern und/oder die Emission von Geräuschen zu vermindern.

Die Aufgabe wird durch ein Verfahren nach Anspruch 1 sowie den Gegenständen nach den weiteren unabhängigen Ansprüchen gelöst. Die Unteransprüche geben optionale Weiterbildungen der Erfindung an.

Gemäß der Erfindung wird ein Verfahren zum Schalten eines elektrisch schaltbaren Getriebes für ein Fahrzeug, insbesondere Nutzfahrzeug, bereitgestellt. Dabei weist das Verfahren auf: Ermitteln einer ein Schaltelement des Getriebes betreffenden Randbedingung; Bestimmen eines Bewegungsprofils für das Schaltelement, wobei das Bewegungsprofil eine Position des Schaltelements in Abhängigkeit von einer Zeit definiert; und Ausgeben eines Regelsignals zum Regeln der Position des Schaltelements anhand des Bewegungsprofils.

Dabei wurde erkannt, dass das elektrisch schaltbare Getriebe gegenüber einem pneumatischen Schaltaktuator erweiterte Möglichkeiten der Steuerung und/oder Regelung des elektrischen Schaltaktuators und somit zum Bewegen des Schaltelements aufweist. Dabei kann dem Schaltelement beispielsweise ein ruckfreies Bewegungsprofil aufgeprägt werden, um die Sollposition beziehungsweise Position des Schaltelements in Abhängigkeit der Zeit zu definieren. Das Bewegungsprofil legt die Sollposition des Schaltelements in Abhängigkeit der Zeit fest. Die Randbedingung kann die Bewegung des Schaltelements definieren, indem durch die Randbedingung eine das Bewegungsprofil definierende Position, Geschwindigkeit, Beschleunigung und/oder eine weitere Ableitung der Position nach der Zeit vorgibt. Dabei definieren die Randbedingungen einen Bewegungsabschnitt des Schaltelements des Getriebes. Mit anderen Worten wird mit Hilfe der vorzugebenden Randbedingungen etwa der Lage, Geschwindigkeit oder der Beschleunigung der Randpunkte des Bewegungsabschnitts somit der Verlauf zwischen den Randpunkten bestimmt. Das Bewegungsprofil ist durch die Aneinanderreihung von Bewegungsabschnitten als Ganzes vervollständigt gemäß der zu lösenden Bewegungsaufgabe. Das Profil kann somit anhand der Randbedingung definiert werden, wobei die Randbedingung je nach Anwendungsfall die Bewegung des Schaltelements bestimmen beziehungsweise limitieren. Eine Veränderung der vorzugebenden Randbedingungen der Bewegungsabschnitte kann derart vorteilhaft genutzt werden, um die Eigenschaften des Schaltvorgangs wie Auftreffgeschwindigkeit und Überschwingen positiv zu beeinflussen und geltende Limitierungen in dem Bewegungsablauf vor vornherein zu berücksichtigen.

Durch das Bewegen des Schaltelements gemäß dem Bewegungsprofil kann beispielsweise ein Aufprall des Schaltelements in einer Endposition mit einer unkontrollierten und/oder undefinierten Geschwindigkeit vermieden werden. Damit können Geräusche vermindert werden und die Schaltperformance kann verbessert werden. Ferner werden durch das elektrische Schalten Ausstoßgeräusche wie sie bei pneumatisch schaltbaren Getrieben auftreten vermieden. Durch eine gezielte Auslegung von ineinandergreifenden Schaltelementen mit Hinblick auf das beschriebene elektrische Schalten kann eine Kostenreduktion erzielt werden. Die Position kann die Differenz zwischen dem Schaltelement und einem weiteren Schaltelement mit dem das Schaltelement ineinandergreifen soll und/oder kann charakterisieren beziehungsweise angeben.

Optional umfasst die Randbedingung eine Aufprallgeschwindigkeit an einer Randposition. Dabei kann die Randposition beispielsweise eine Neutralstellung, einen beginnenden Eingriff des Schaltelements mit dem weiteren Schaltelement und/oder ein Beenden eines Schaltens bedeuten. Dabei wurde erkannt, dass es möglich ist, dass durch die zeitabhängige Definition der Bewegung des Schaltelements ein Festlegen der Aufprallgeschwindigkeit möglich ist, wodurch eine Balance zwischen Schaltperformance und Geräuschentwicklung erzielt werden kann.

Optional genügt ein Betrag der Aufprallgeschwindigkeit an der Randposition einer Schwellwertbedingung. Dabei kann die Schwellwertbedingung durch eine Grenzgeschwindigkeit definiert werden. Unterhalb der Grenzgeschwindigkeit, also bei einer Aufprallgeschwindigkeit mit einem Betrag kleiner als der Grenzgeschwindigkeit, kann die Geräuschemission beim Schalten vermindert werden. Anderenfalls, oberhalb der Grenzgeschwindigkeit, also bei einer Aufprallgeschwindigkeit mit einem Betrag größer als der Grenzgeschwindigkeit, kann die Geräuschemission beim Schalten nicht vermindert werden. Das Bewegungsprofil kann durch ein Definieren der Randbedingung derart bestimmt werden, dass die Aufprallgeschwindigkeit der Schwellwertbedingung genügt.

Optional betrifft die Randbedingung eine zum Schalten des Getriebes charakteristische Kraft. Beispielsweise kann die Randbedingung eine Beschleunigung betreffen, die durch die Kraft zum Kämmen des Schaltelements mit dem weiteren Schaltelement geteilt durch eine charakteristische Masse definierbar ist. Diese kann durch die Vorgabe einer Beschleunigung als Randbedingung derart positiv beeinflusst werden, dass ein Schwellwert nicht überschritten wird. Dafür errechnet sich der Schwellwert der Beschleunigungsvorgabe aus der gewünschten Kraft und der bewegten Masse des betrachteten Getriebes bzw. Schaltmechanismus.

Optional weist das Bewegungsprofil einen polynomialen Zusammenhang zwischen der Position des Schaltelements und der Zeit auf. Damit kann das Bewegungsprofil effektiv definiert werden. Optional weist der polynomialen Zusammenhang eine Ordnung von drei oder höher auf, beispielsweise von fünf, um eine ruckfreie Bewegung des Schaltelements definieren zu können. Die Ordnung des polynomialen Zusammenhang kann dabei die Ordnung einer Ableitung der Position nach der Zeit sein, womit Randbedingung entsprechend der Ordnung der Ableitung der Position nach der Zeit ergeben, respektive Geschwindigkeit, Beschleunigung und Ruck.

Optional weist das Bewegungsprofil eine variable Geschwindigkeit zwischen durch die Randbedingung definierten Randpositionen auf. Damit ist es möglich die Schaltperformance zu verbessern und gleichzeitig die Emission von Geräuschen zu vermindern. Dabei wurde erkannt, dass an den Randpositionen eine geringere Geschwindigkeit angewendet werden kann als zwischen den Randpositionen, um einen vergleichsweise geräuscharmen Kontakt des Schaltelements an den Randpositionen zu bewirken und das Schaltelement zwischen den Randpositionen vergleichsweise schnell bewegen zu können.

Optional definiert die Randbedingung eine Zahn-zu-Zahn-Stellung des Getriebes. Damit kann die Bewegung des Schaltelements in einer potentiellen Zahn-zu-Zahn-Stellung kontrolliert werden, um das Eintreten eines Blockierens des Schaltelements in der Zahn-zu-Zahn-Stellung zu vermeiden.

Optional betrifft die Randbedingung eine Mehrzahl von Schaltelementen, und das Bewegungsprofil wird für die Mehrzahl von Schaltelementen bestimmt. Damit kann das oben beschriebene Verfahren für die Ansteuerung von mehr als einem Schaltelement genutzt werden. Dabei kann sich die Randbedingungen des Bewegungsübergangs aus Schaltsituationen an zwei oder mehreren Schaltelementen ergeben.

Optional umfasst die Randbedingung Aufprallgeschwindigkeiten an einer Randposition, und ein Betrag jeder der Aufprallgeschwindigkeit an der Randposition genügt einer Schwellwertbedingung. Mit anderen Worten kann die Randbedingung beziehungsweise die Parametrierung des Bewegungsübergangs anhand der Kriterien Auftreffgeschwindigkeit und/oder -geräusch verschiedener Schaltelemente gewählt werden. Dabei kann sich die Einhaltung von Schwellwerten auch für die beteiligten Schaltelemente des jeweiligen Bewegungsübergangs ergeben. Dabei ist es möglich, eine Balancierung zwischen Geräuschen und Kräften der Gesamt-Schaltaktorik, also der Mehrzahl der Schaltelemente, zu erzielen.

Gemäß einem weiteren Aspekt der Erfindung wird ein Computerprogramm und/oder computerlesbares Medium bereitgestellt. Das Computerprogramm und/oder computerlesbare Medium umfasst Befehle, die bei der Ausführung des Programms bzw. der Befehle durch einen Computer diesen veranlassen, das hier beschriebene Verfahren und/oder die Schritte des hier beschriebenen Verfahrens durchzuführen. Das Computerprogramm und/oder computerlesbare Medium kann Befehle umfassen, um als optional beschriebene Schritte des Verfahrens durchzuführen, um einen entsprechenden technischen Effekt zu erzielen.

Gemäß einem weiteren Aspekt der Erfindung wird ein Steuergerät für ein Fahrzeug, insbesondere Nutzfahrzeug, mit einem elektrisch schaltbaren Getriebe bereitgestellt. Das Steuergerät kann dazu eingerichtet sein, als optional beschriebene Schritte des Verfahrens durchzuführen, um einen entsprechenden technischen Effekt zu erzielen.

Gemäß einem weiteren Aspekt der Erfindung wird ein elektrisch schaltbares Getriebe bereitgestellt. Das elektrisch schaltbare Getriebe weist ein Schaltelement und das oben beschriebene Steuergerät auf.

Optional weist das Getriebe einen elektronisch kommutierten Synchronmotor zum Betätigen des Schaltelements auf. Vorteilhaft ist beispielsweise die Lebensdauer eines derartigen bürstenlosen Motors zur Aktuierung einzuschätzen.

Gemäß einem weiteren Aspekt der Erfindung wird ein Fahrzeug, insbesondere Nutzfahrzeug, bereitgestellt. Das Fahrzeug weist ein elektrisch schaltbares Getriebe und das hier beschriebene Steuergerät auf. Das Fahrzeug und/oder das Steuergerät kann dazu eingerichtet sein, als optional und/oder vorteilhaft beschriebene Schritte des Verfahrens durchzuführen, um einen entsprechenden technischen Effekt zu erzielen.

Weitere Vorteile und Merkmale der Erfindung sowie deren technische Effekte ergeben sich aus den Figuren und der Beschreibung der in den Figuren gezeigten bevorzugten Ausführungsformen. Dabei zeigen
Fig. 1 eine schematische Darstellung eines Fahrzeugs, insbesondere Nutzfahrzeugs, gemäß einer Ausführungsform der Erfindung;
Fig. 2 eine schematische Darstellung eines Bewegungsprofils zum Bewegen eines Schaltelements eines elektrisch schaltbaren Getriebes gemäß einer Ausführungsform der Erfindung; und
Fig. 3 eine schematische Darstellung eines Ablaufs eines Verfahrens gemäß einer Ausführungsform der Erfindung.

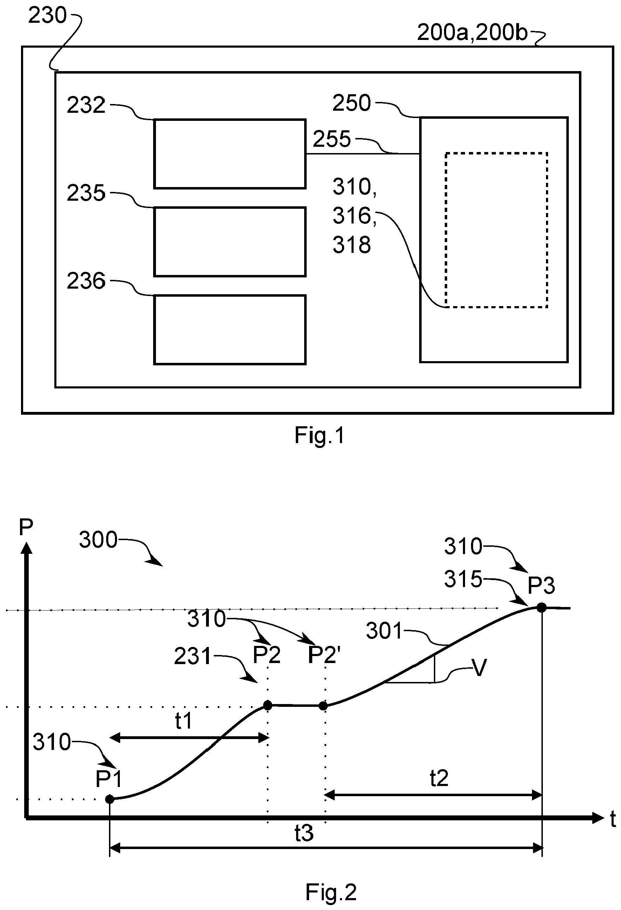

Figur 1 zeigt eine schematische Darstellung eines Fahrzeugs 200a, insbesondere Nutzfahrzeugs 200b, gemäß einer Ausführungsform der Erfindung. Das Fahrzeug 200a, insbesondere Nutzfahrzeug 200b, wird im Folgenden als Fahrzeug 200a, 200b bezeichnet. Das Fahrzeug 200a, 200b ist ein Landfahrzeug. Das Fahrzeug 200a, 200b ist beispielsweise ein Lastkraftwagen, ein Bus und/oder eine Zugmaschine eines mehrgliedrigen Fahrzeugs.

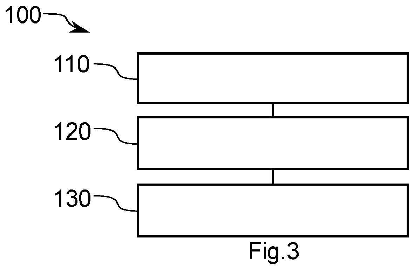

Das Fahrzeug 200a, 200b ist dazu eingerichtet, das mit Bezug zu Figur 3 beschriebene Verfahren 100 durchzuführen. Dafür umfasst das Fahrzeug 200a, 200b ein elektrisch schaltbares Getriebe 230. Das elektrisch schaltbares Getriebe 230 weist ein Schaltelement 235 und ein weiteres Schaltelement 236 auf. Ein Schaltvorgang wird erzielt, indem beispielsweise das Schaltelement 235 aus einer Neutralstellung mit dem weiteren Schaltelement 236 in Eingriff gebracht wird. Dabei ändert sich ein Abstand zwischen dem Schaltelement 235 und dem weiteren Schaltelement 236. Eine den Abstand zwischen dem Schaltelement 235 und dem weiteren Schaltelement 236 beschreibende Größe wird im Folgenden als Position P bezeichnet.

Um die Position P einzustellen und/oder zu regeln umfasst das Getriebe 230 ein Steuergerät 250, einen regelbaren elektrischen Schaltaktuator (nicht gezeigt) und einen elektronisch kommutierten Synchronmotor 232 beziehungsweise einen bürstenlosen Gleichstrommotors als Stellmotor zum Betätigen des Schaltelements 235. Das Steuergerät 250 ist dazu eingerichtet, ein Regelsignals 255 zum Regeln der Position des Schaltelements 235 auszugeben.

Das Steuergerät 250 ist ferner dazu eingerichtet, das mit Bezug zu Figur 3 beschriebene Verfahren 100 durchzuführen, um ein Schalten des elektrisch schaltbaren Getriebes 230 durchzuführen. Dafür ist das Steuergerät 250 dazu eingerichtet, ein wie mit Bezug zu Figur 2 beschriebenes Bewegungsprofil 300 zu bestimmen. Dafür ermittelt das Steuergerät 250 in Figur 1 nur schematisch eingezeichnete das Schaltelement 235 des Getriebes 230 betreffenden Randbedingungen 310. Die Randbedingungen 310 definieren beispielsweise eine Position P zu einer Zeit t und eine Geschwindigkeit v und/oder eine Beschleunigung beziehungsweise eine Kraft 316, die an der Position P zu der Zeit t durch das Schaltelement 235 anzunehmen ist. Dabei kann eine in dem Steuergerät 250 definierte Schwellwertbedingung 318 berücksichtigt werden.

Das Steuergerät 250 kann dabei zunächst ein ruckfreies Bewegungsprofil 300 zum Ineinandergreifen beziehungsweise Einkuppeln und/oder Auskuppeln eines Ganges definieren. Dafür werden die Randbedingungen 310 definiert und das den Randbedingungen 310 genügende Bewegungsprofil 300 definiert. Dabei wird die Position P in Abhängigkeit der Zeit t bereitgestellt und entsprechend dem Bewegungsprofil 300 eingeregelt. Dabei kann jeglicher Regelalgorithmus verwendet werden, beispielsweise eine Kaskade zum Regeln der Position, der Geschwindigkeit und/oder eines Moments beziehungsweise einer Kraft. Dabei kann ausgenutzt werden, dass elektrisch betätigbare Aktuatoren gegenüber pneumatischen Stellern eine verbesserte Regelbarkeit und Kontrolle der Aktuierung zulassen.

In einer weiteren Ausführungsform, können die Position P des Schaltelements 235 und des weiteren Schaltelements 236 eingestellt und/oder geregelt werden. Dementsprechend werden Randbedingungen 310 definiert, die eine Mehrzahl von Schaltelementen 235, 236 betreffen, und das Bewegungsprofil 300 wird für die Mehrzahl von Schaltelementen 235, 236 bestimmt. Die Randbedingungen 310 definieren beispielsweise jeweils eine Position P zu einer Zeit t und eine Geschwindigkeit v und/oder eine Beschleunigung beziehungsweise eine Kraft 316, die an der Position P zu der Zeit t durch das Schaltelement 235 beziehungsweise das weitere Schaltelement 236 anzunehmen ist. Dabei können in dem Steuergerät 250 für das jeweilige Schaltelement 235, 236 und/oder das System der Schaltelemente 235, 236 definierte Schwellwertbedingungen 318 berücksichtigt werden.

Figur 2 zeigt eine schematische Darstellung eines Bewegungsprofils 300 zum Bewegen eines Schaltelements 235 eines elektrisch schaltbaren Getriebes 230 gemäß einer Ausführungsform der Erfindung. Ein derartiges Getriebe 230 ist mit Bezug zu Figur 1 beschrieben. Figur 2 wird unter Bezugnahme auf Figur 1 und deren Beschreibung beschrieben.

Das Bewegungsprofil 300 gemäß Figur 2 definiert einen Zusammenhang der Position P in Abhängigkeit der Zeit t, jeweils in einer beliebigen Skala.

Das Bewegungsprofil 300 ist dabei derart definiert, dass bestimmte Randbedingungen 310 eingehalten sind. Die Randbedingungen 310 definieren Randpositionen P1, P2, P2', P3. Die Randpositionen P1, P2, P2', P3 müssen dabei keine extremalen Positionen P, also Abstände zwischen dem Schaltelement 235 und dem weiteren Schaltelement 236 definieren. Beispielsweise kann eine erste Randposition P1 eine Neutralstellung definieren, eine zweite Randposition P2, P2` kann eine Position P definieren, bei der in Eingriff zu bringende Zähne einander berührend und eine dritte Randposition P3 kann eine Position P definieren in der ein Schaltvorgang beendet ist. Damit kann in der zweiten Position P2, P2' eine Zahn-zu-Zahn-Stellung 231 vorliegen. Gemäß dem Bewegungsprofil 300 vergeht zwischen dem Erreichen der zweiten Position P2 und dem Verlassen der zweiten Position P2' eine Zeit t, um die Zahn-zu-Zahn-Stellung 231 zu vermeiden und die Gefahr eines Blockierens des Schaltelements 235, starke Geräuschemission und/oder starken Verschleiß zu vermindern.

Zwischen dem Annehmen der ersten Randposition P1 und dem Annehmen der zweiten Randposition P2 ist eine erste Zeit t1 definiert. Zwischen dem Annehmen der zweiten Randposition P2` und dem Annehmen der dritten Randposition P3 ist eine zweite Zeit t2 definiert.

Zwischen dem Annehmen der ersten Randposition P1 und dem Annehmen der dritten Randposition P3 ist eine dritte Zeit t3 definiert. Die dritte Zeit t3 charakterisiert dabei die Dauer des Schaltvorgangs. Die dritte Zeit t3 ergibt sich unter anderem aus der Summe der ersten Zeit t1 und der zweiten Zeit t2. Die erste Zeit t1 und die zweite Zeit t2 werden derart definiert, dass die dritte Zeit t3 möglichst kurz für eine kurze Kraftunterbrechungszeit während des Schaltvorgangs ist, aber groß genug, um Geräusche und Last auszugleichen. Die erste Zeit t1 und die zweite Zeit t2 sind dafür optional durch beispielsweise einen Hersteller des Getriebes 230 und/oder des Fahrzeugs 200a, 200b parametrierbar.

Das Bewegungsprofil 300 weist einen polynomialen Zusammenhang 301 zwischen der Position P des Schaltelements 235 und der Zeit t auf. Beispielsweise ist der polynomialen Zusammenhang 301 ein Zusammenhang zwischen der Position P und der Zeit t des Grades fünf. Damit kann der polynomialen Zusammenhang 301 nach der Zeit abgeleitet werden, um die Geschwindigkeit v und/oder die Beschleunigung der Bewegung zu bestimmen und entsprechende Randbedingungen 310 zu definieren. Das Bewegungsprofil 300 weist eine variable Geschwindigkeit v zwischen durch die Randbedingung 310 definierten Randpositionen P1, P2, P2', P3 auf. Die Randbedingungen 310 umfasst eine Aufprallgeschwindigkeit 315 an einer Randposition P1, P2, P2', P3. Dabei genügt der Betrag der Aufprallgeschwindigkeit 315 an den Randpositionen P2 und P3 einer Schwellwertbedingung 318und ist insbesondere kleiner als ein Geschwindigkeitsschwellwert, beispielsweise asymptotisch null. Die Randbedingung 310 an der dritten Randposition P3 betrifft eine zum Schalten des Getriebes 230 charakteristische Kraft 316, beispielsweise gegeben durch die Kraft 316, die zum Kämmen benötigt wird geteilt durch eine charakteristische Masse.

Das Bewegungsprofil 300 kann ruckfrei sein, d.h., die zeitliche Ableitung der Beschleunigung ist null. Beispielsweise können die Randbedingungen 310 definieren, dass die Beschleunigung an der ersten Randposition P1 und der zweiten Randposition P2, P2` null ist und an der dritten Randposition P3 gleich der charakteristische Kraft 316 geteilt durch eine charakteristische Masse ist.

Damit können gegenüber einer pneumatischen Regelung folgende Vorteile erzeugt werden: keine Geräusche durch Ausstoß von Luft, Bereitstellung einer kontrollierten Bewegung, die Geschwindigkeit v kann in den relevanten Randpositionen P1, P2, P2', P3 direkt definiert werden, die Geschwindigkeit v ist nur an den Randpositionen P1, P2, P2', P3 definiert und somit limitiert, die Anwendung anderer Geschwindigkeiten v zwischen den Randpositionen P1, P2, P2', P3 ist möglich, um Geräuschemission und Schaltperformance auszubalancieren, mechanische Belastungen angrenzender Komponenten des Getriebes 230 werden vermindern, die Schaltzeit kann verkürzt werden, und es ergibt sich die Möglichkeit durch eine entsprechende Konstruktion durch eine Anpassung von Anschlägen, Steifheit und/oder Befestigungen Kosten und Gewicht zu reduzieren.

Figur 3 zeigt eine schematische Darstellung eines Ablaufs eines Verfahrens 100 gemäß einer Ausführungsform der Erfindung. Das Verfahren 100 ist ein Verfahren 100 zum Schalten eines elektrisch schaltbaren Getriebes 230 für ein Fahrzeug 200a, insbesondere Nutzfahrzeug 200b. Ein derartiges Fahrzeug 200a, 200b ist mit Bezug zu Figur 1 beschrieben. Ein Bewegungsprofil 300 zum Schalten eines elektrisch schaltbaren Getriebes 230 ist mit Bezug zu Figur 2 beschrieben. Figur 3 wird unter Bezugnahme auf Figuren 1 und 2 beschrieben.

Das Verfahren 100 gemäß Figur 3 weist auf: Ermitteln 110 einer ein Schaltelement 235 des Getriebes 230 betreffenden Randbedingung 310. Die Randbedingung 310 umfasst eine Aufprallgeschwindigkeit 315 an einer Randposition P1, P2, P2', P3. Dabei genügt ein Betrag der Aufprallgeschwindigkeit 315 an der Randposition P2 P3 einer Schwellwertbedingung 318. Die Randbedingung 310 betrifft eine zum Schalten des Getriebes 230 charakteristische Kraft 316. Die Randbedingung 310 definiert eine Zahn-zu-Zahn-Stellung 231 des Getriebes 230.

Er erfolgt ein Bestimmen 120 eines Bewegungsprofils 300 für das Schaltelement 235, wobei das Bewegungsprofil eine Position P des Schaltelements 235 in Abhängigkeit von einer Zeit t definiert. Das Bewegungsprofil 300 weist einen polynomialen Zusammenhang 301 zwischen der Position P des Schaltelements 235 und der Zeit t auf. Das Bewegungsprofil 300 weist eine variable Geschwindigkeit v zwischen durch die Randbedingung 310 definierten Randpositionen P1, P2, P2', P3 auf.

Es erfolgt ein Ausgeben 130 eines Regelsignals 255 zum Regeln der Position des Schaltelements 235 anhand des Bewegungsprofils 300. Das Ausgeben 130 erfolgt an eine Elektronik zur Regelung eines bürstenlosen Gleichstrommotors als Stellmotor.

### Bezugszeichen (Teil der Beschreibung)

- 100: Verfahren
- 110: Ermitteln
- 120: Bestimmen
- 130: Ausgeben

- 200a: Fahrzeug
- 200b: Nutzfahrzeug

- 230: elektrisch schaltbares Getriebe
- 231: Zahn-zu-Zahn-Stellung
- 232: Synchronmotor
- 235: Schaltelement
- 236: weiteres Schaltelement
- 250: Steuergerät
- 255: Regelsignal

- 300: Bewegungsprofil
- 301: polynomialer Zusammenhang
- 310: Randbedingung
- 315: Aufprallgeschwindigkeit
- 316: Kraft
- 318: Schwellwertbedingung

- P: Position
- P1, P2, P2', P3: Randposition
- t: Zeit
- t1: erste Zeit
- t2: zweite Zeit
- t3: dritte Zeit
- v: Geschwindigkeit

## Patentansprüche

1. Verfahren (100) zum Schalten eines elektrisch schaltbaren Getriebes (230) für ein Fahrzeug (200a), insbesondere Nutzfahrzeug (200b), wobei das Verfahren (100) aufweist:
- Ermitteln (110) einer ein Schaltelement (235) des Getriebes (230) betreffenden Randbedingung (310);
- Bestimmen (120) eines Bewegungsprofils (300) für das Schaltelement (235), wobei das Bewegungsprofil (300) eine Position (P) des Schaltelements (235) in Abhängigkeit von einer Zeit (t) definiert; und
- Ausgeben (130) eines Regelsignals (255) zum Regeln der Position des Schaltelements (235) anhand des Bewegungsprofils (300).

2. Verfahren nach Anspruch 1, wobei die Randbedingung (310) eine Aufprallgeschwindigkeit (315) an einer Randposition (P2, P3) umfasst.

3. Verfahren nach Anspruch 2, wobei ein Betrag der Aufprallgeschwindigkeit (315) an der Randposition (P2, P3) einer Schwellwertbedingung (318) genügt.

4. Verfahren nach einem der vorherigen Ansprüche, wobei die Randbedingung (310) eine zum Schalten des Getriebes (230) charakteristische Kraft (316) betrifft.

5. Verfahren nach einem der vorherigen Ansprüche, wobei das Bewegungsprofil (300) einen polynomialen Zusammenhang (301) zwischen der Position (P) des Schaltelements (235) und der Zeit (t) aufweist.

6. Verfahren nach einem der vorherigen Ansprüche, wobei das Bewegungsprofil (300) eine variable Geschwindigkeit (v) zwischen durch die Randbedingung (310) definierten Randpositionen (P1, P2, P2', P3) aufweist.

7. Verfahren nach einem der vorherigen Ansprüche, wobei die Randbedingung (310) eine Zahn-zu-Zahn-Stellung (231) des Getriebes (230) definiert.

8. Verfahren nach einem der vorherigen Ansprüche, wobei die Randbedingung (310) eine Mehrzahl von Schaltelementen (235, 236) betrifft, und das Bewegungsprofil (300) für die Mehrzahl von Schaltelementen (235, 236) bestimmt wird.

9. Verfahren nach Anspruch 8, wobei die Randbedingung (310) Aufprallgeschwindigkeiten (315) an einer Randposition (P2, P3) umfasst, und ein Betrag jeder der Aufprallgeschwindigkeit (315) an der Randposition (P2, P3) einer Schwellwertbedingung (318) genügt.

10. Computerprogramm und/oder computerlesbares Medium, umfassend Befehle, die bei der Ausführung des Programms bzw. der Befehle durch einen Computer diesen veranlassen, das Verfahren (100) und/oder die Schritte des Verfahrens (100) nach einem der Ansprüche 1 bis 9 durchzuführen.

11. Steuergerät (250) für ein Fahrzeug (200a), insbesondere Nutzfahrzeug (200b), mit einem elektrisch schaltbaren Getriebe (230), wobei das Steuergerät (250) dazu eingerichtet ist, das Verfahren (100) nach einem der Ansprüche 1 bis 9 durchzuführen.

12. Elektrisch schaltbares Getriebe (230) mit einem Schaltelement (235) und einem Steuergerät (250) nach Anspruch 11.

13. Elektrisch schaltbares Getriebe (230) nach Anspruch 12, wobei das Getriebe (230) einen elektronisch kommutierten Synchronmotor (232) zum Betätigen des Schaltelements (235) aufweist.

14. Fahrzeug (200a), insbesondere Nutzfahrzeug (200b), mit einem elektrisch schaltbaren Getriebe (230) nach Anspruch 12 oder 13.
